# EUROPÄISCHE PATENTSCHRIFT

(11) **EP 0 652 147 B1**
(45) Veröffentlichungstag und Bekanntmachung des Hinweises auf die Patenterteilung: **28.08.1996**
(21) Anmeldenummer: 94250272.5
(22) Anmeldetag: 09.11.1994
(51) Int. Cl.: B60T 13/66

(54) **Ventileinrichtung für Fahrzeugbremsen, insbesondere von Schienenfahrzeugen**
Valve device for vehicle brakes, especially of railway vehicles
Dispositif de valve pour freins de véhicule, notamment de véhicule ferroviaire

(30) Priorität: 10.11.1993 DE 4339013; 14.10.1994 EP 94250250
(43) Veröffentlichungstag der Anmeldung: 10.05.1995
(73) Patentinhaber: MANNESMANN Aktiengesellschaft, D-40213 Düsseldorf (DE)
(72) Erfinder: Keschwari, Mahmud Rasti, D-30890 Barsinghausen (DE)
(74) Vertreter: Presting, Hans-Joachim, Dipl.-Ing.

(56) Entgegenhaltungen:
- FR-A- 2 521 508
- FR-A- 2 630 987

## Beschreibung

Die Erfindung betrifft eine Bremseinrichtung für Fahrzeuge, insbesondere für Schienenfahrzeuge, bzw. Schienenfahrzeugverbände, bei welchen durch eine zentrale Leitstelle das Bremssignal ausgelöst wird, gemäß Oberbegriff der Patentansprüche 1 bis 4.

Gemäß Oberbegriff handelt es sich hier um Bremsvorrichtungen nach der bekannten UIC 540-Norm. Hierbei geht man zentral von einem Führerbremsventil aus, welches an einer Druckquelle im Zugfahrzeug, d.h. in der Lokomotive, angeschlossen ist. Das Führerbremsventil ist mit der sogenannten Hauptluftleitung HL verbunden, welche durch alle Fahrzeuge des Fahrzeugverbundes durchgeschleift ist. Nach der herkömmlichen Norm UIC 540 enthält die Bremseinrichtung als druckführende Leitung nur die HL-Leitung. Wird nun am Zugfahrzeug bzw. an der Leitstelle das Signal "Bremsen" ausgelöst, so öffnet das Führerbremsventil die HL-Leitung, was einen Druckabfall in derselben bewirkt. Dieser Druckabfall setzt sich von Fahrzeug zu Fahrzeug fort, und wird in bekannter Weise von einem jeden fahrzeugbezogenen Steuerventil, welches in jedem Wagen des Zugverbundes angeordnet ist, erkannt, wobei dann der Druckverlust in HL ein vorher befülltes Druckmittelreservoir auf den entsprechenden Bremszylinder durchsteuert. Nach dieser UIC 540-Norm besitzt die HL-Leitung Doppelfunktion. Diese bestehen zum ersten aus der pneumatischen Übertragung des Bremssignales, welches durch den beschriebenen erzeugbaren Druckabfall repräsentiert wird, und zum zweiten werden über die HL-Leitung im nichtbetätigten Zustand der Bremseinrichtung die Druckmittelreservoire befüllt. Bekanntermaßen werden daher im Zugverbund durch die Lokomotive bzw. durch das Zugfahrzeug zyklisch ausgelöste Füllstöße erzeugt, die auf die HL-Leitung gegeben werden, um die Druckmittelreservoire auf ihrem Nenndruck zu halten. Wird die Bremse betätigt, so wird bei diesem "Ein-Leitungssystem (pneumatisch)" die Bremszylinderbetätigung im Bremsmoment alleine aus dem Druckmittelreservoir gespeist. Diese bekannten Steuerventile sind bekanntermaßen rein pneumatische bzw. mechanische Elemente. Bekanntermaßen findet in den benannten Steuerventilen auch noch eine sogenannte Bremsbeschleunigung statt. Diese ist bekannt und durch die Tatsache motiviert, daß sich das Bremssignal normalerweise mit einer Ausbreitungsgeschwindigkeit kleiner als die Schallgeschwindigkeit durch die HL-Leitung ausbreitet. Bei langen Zugverbänden kommt somit das Bremssignal an den letzten Fahrzeugen sehr viel später an. Um die Fortpflanzungsgeschwindigkeit des pneumatischen Signales zu erhöhen, wird am ersten Steuerventil, d.h. am ersten Fahrzeug, die HL-Leitung zusätzlich weiter entlüftet, und dies setzt sich sukzessive von einem zum anderen Steuerventil, d.h. von einem zum anderen Fahrzeug fort, so daß sich die Übertragungsgschwindigkeit des pneumatischen Signales erhöht.

Aus der Schrift FR 2.630.987 ist ein Steuerkreis für Fahrzeugbremsen bekannt, der zwischen einer pneumatischen Leitung und einem Bremszylinder eines Schienenfahrzeuges angelegt ist, um den erzeugten pneumatischen Druck in den Bremszylinder zu leiten. Dabei wird außerdem ein Absperrventil für diesen Steuerkreis verwendet. Im Normalbetrieb wird dieser Kreis kontrolliert bzw. G eregelt über eine elektrische Leitung in Verbindung mit einer elektropneumatischen Einrichtung. Im Falle des Ausfalls der elektrischen Energieversorgung wird dieser Kreis kontrollierbar durch die pneumatische Speiseleitung, wobei es hierbei möglich ist, von der klassischerweise doppelt angelegten Kommandobremsleitung auszuweichen auf die pneumatische Speiseleitung.

Nach der UIC Norm kommt einem bestimmten Muster von Druckabfallgradienten in der Hauptluftleitung, d.h. Druckabfall pro Zeiteinheit, auch eine entsprechende mehr oder weniger Durchsteuerung bzw. Füllzeit des Bremszylinders zu. Das heißt je steiler der Gradient, um so schneller wird der Bremszylinderdruck erreicht, wobei gewisse Zeitgrenzen definiert sind. Ein solches Verhalten kann bei langen Zügen und bei Bremseinrichtungen nach der beschriebenen Norm UIC 540 bei jedem einzelnen Fahrzeug eines solchen Zugverbundes wegen der physikalischen Strömungsgesetze nur schwer realisiert werden. Für die Anstrebungen hinsichtlich des Hochgeschwindigkeits-Güterverkehrs, ist eine genaue Bremsung an jedem einzelnen Fahrzeug des Fahrzeugverbundes, d.h. des Zuges, notwendig. Dies aus dem Grund, da hier die Sicherheitsauflagen bezüglich Bremsweg sehr hoch sind, und eine nahezu 100 %-ig optimierte Bremsung notwendig wird.

Der Erfindung liegt daher die Aufgabe zugrunde, eine druckmittelbetriebene Bremseinrichtung für Schienenfahrzeugverbunde der gattungsgemäßen Art derart weiterzubilden, daß jedes Fahrzeug des Fahrzeugverbundes bzw. des Zuges zur Erreichung eines möglichst kurzen Bremsweges optimal gebremst werden kann.

Bei einer Bremseinrichtung der gattungsgemäßen Art wird die Aufgabe erfindungsgemäß durch die Merkmale der Patentansprüche 1 und 4 gelöst. Weitere vorteilhafte Ausgestaltungen der Erfindung sind in den übrigen Unteransprüchen gegeben.

Das Wesen der Erfindung greift an der Stelle des Steuerventiles. Erfindungsgemäß wird dieses Steuerventil fortan nicht mehr rein mechanisch bzw. pneumatisch ausgestaltet, sondern mit elektronischen Elementen, sowie Meßwertumformern, im wesentlichen Druckmeßumformern versehen. Dies führt dazu, daß die Maßgabe, daß das Steuerventil auf einen Druckabfall zu reagieren hat, und diesen auch noch gradientenmäßig auszuwerten hat, um zu entscheiden, ob eine vorsichtige oder möglicherweise eine Notbremse vorgenommen werden muß, nun elektrisch bzw. elektronisch gegeben sein muß. Hierbei war das grundlegende Problem, welches durch die Erfindung gelöst werden mußte, daß ein übliches Druckmittelleitungssystem nach der Norm UIC 540 verwendet wird, was bedeutet, daß wiederum aus einer einzigen Leitung sowohl das pneumatische Bremssignal, als auch die Befüllung des Druckmittelreservoirs zur Bremsbetätigung erfolgen muß. Aus der Ermittlung der aktuellen Druckwerte bzw. aus der Errechenbarkeit der Gradienten durch die zusätzlichen elektronischen Hilfsmittel im Bereich der Steuerventileinrichtung, ist es möglich, die Bremssignalgradienten und damit die Bremsbetätigung erheblich feinfühliger vorzunehmen bzw. zu dosieren. Fernerhin ist es unter Zuhilfenahme elektronischer Mittel nunmehr möglich, daß ganze System mit zusätzlicher Anordnung von Speicherelementen adaptiv anzulegen. Das heißt die Erfindung ermöglicht es, daß in jedem Wagen die baugleiche Steuerventileinrichtung das für das spezifische Fahrzeug, in welchem die entsprechende Steuerventileinrichtung angeordnet ist, und die dortige Bremse betätigt, die spezifischen Bremsmerkmale des Wagens erkennt, diese auch abspeichert und das eigene Bremsregulieren darauf einstellt. Dies ist der Vorteil, der durch die Adaptivität des Systems gegeben wird. Fernerhin können über die elektronischen Mittel sämtliche Betriebszustände an die Leitstelle beispielsweise über Busverbindungen übertragen und angezeigt bzw. ausgewertet werden. Somit ist auch die Rückmeldefunktion von jedem einzelnen Fahrzeug zum Zugfahrzeug möglich. Hierdurch bleibt nach wie vor die UIC Norm 540, d.h. die entsprechenden Kennlinien der Gradienten zur Auslösung der Bremsen, erhalten.

Im übrigen ergibt sich, daß bei einem herkömmlichen Steuerventil die Aussteuerung des Bremsdrucks nur ein regelungstechnisch bedingt geschlossenes System ist. Die Geschlossenheit ergibt sich hier aus einer Druckangleichung, so daß sich die Druckverhältnisse in der Bremsanlage des Wagens mehr oder weniger selbsttätig einstellen, wobei einzige Bezugsgrößen nur der momentane HL-Druck und der eingespeicherte Druck in der Steuerkammer sind. Mit Hilfe der erfindungsgemäßen Lösung ist es jedoch möglich, daß durch die vor Ort angeordnete steuerventilspezifische Elektronikeinheit ein Soll-Istwert-Vergleich für Druckstufung und Druckgradient vorgenommen werden kann, wodurch letztendlich die Ventilansteuerung zur Durchsteuerung des Bremsdruckes feiner geregelt werden kann. Dies hat direkte Auswirkungen darauf, daß die Bremskennlinien reproduzierbarer und genauer erreicht werden können.

Die Erfindung ist in der Zeichnung konstruktiv näher erläutert.

Es zeigt:
- Figur 1: Übersicht über eine Bremseinrichtung nach der Norm UIC 540.
- Figur 2: Erfindungsgemäße Ausgestaltung der substituierten Steuerventileinrichtung.
- Figur 3: Zweite Variante; ersetzendes Proportionalventil durch EP-Umsetzer mit nachgeschaltetem PP-Umsetzer.
- Figur 4: Diagramm über die kennzeichnenden Druckgradienten nach der UIC-Norm 540.

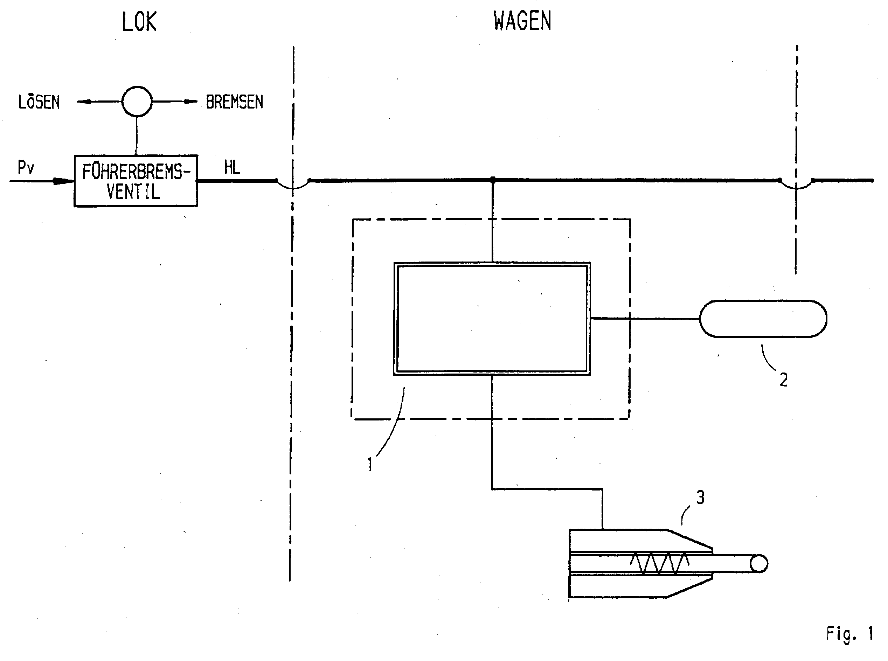

Figur 1 zeigt ein Übersicht über ein Bremssystem nach der Norm UIC 540. Von einem Führerbremsventil Fbv, welches an einer Druckversorgung PV anliegt und innerhalb des Zugfahrzeuges, d.h. der Lokomotive angeordnet ist, geht eine pneumatische Druckleitung HL aus, welche von einem Wagen des Schienenfahrzeugverbandes zum anderen geführt wird. An jedem angehängten Wagen befindet sich eine Bremseinrichtung, im wesentlichen bestehend aus einem Steuerventil 1, einem Druckmittelreservoir 2, sowie einem Bremszylinder 3. Wird nun in der Lokomotive über das Führerbremsventil Fbv die Hauptluftleitung HL im Druck geändert, so geschieht dies nach der Vorgabe des Lokomotivführers mehr oder weniger groß und mehr oder weniger schnell.
Dies bewirkt in der Hauptluftleitung entsprechend einen kleinen oder großen Gradienten bezüglich des Druckabfalls. Dieser Gradient wird vom Steuerventil 1 detektiert, und proportional zu diesem detektierten Gradienten das im Druckmittelreservoir 2 gespeicherte Druckmittel auf den Bremszylinder 3 durchgesteuert. Das Wesen der UIC 540 Norm ist, daß die Hauptluftleitung HL sowohl das pneumatische Signal zum Bremsen und Lösen führt, als auch Versorgungsleitung für das Befüllen des Druckmittelreservoirs 2 ist. Zusätzlich werden durch zeitlich definierte Druckänderungen in der Hauptluftleitung HL Steuerbefehle an die Bremsen der Wagen weitergeleitet.

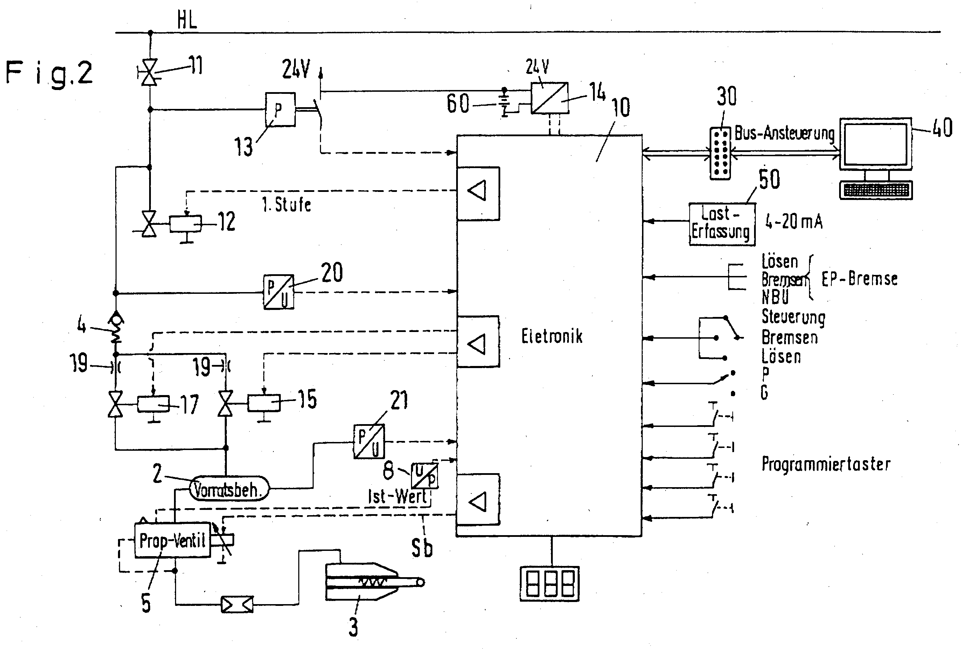

Figur 2 zeigt die erfindungsgemäße Substitution des Steuerventiles durch eine Steuerventileinrichtung. In jedem Fahrzeug befindet sich an der HL-Leitung ein erstes Ventil 11 mit dem die Bremseinrichtung aktiv geschaltet werden kann. Wird dieses Ventil geöffnet, so löst der Druck in der HL-Leitung einen Druckschalter 13 aus, welcher die Elektronik an die elektrische Versorgung 14 schaltet. Für den Fall, daß durch mögliche und systembedingte Umstände der Druck in der HL-Leitung vollkommen absinkt, ist verhindert, daß der betätigte Druckschalter 13 die Elektronik 10 spannungsfrei schaltet. Weiter ist ein Energiespeicher 60 angeordnet, welche die Elektronik 10 auch im ereignisbedingten drucklosen Zustand der HL-Leitung und nach besonderen Kriterien elektrisch unter Versorgung hält und die Bremsbereitschaft auch nach längerer Abstellzeit des Wagens sicherstellt. Nach dem Ein/Aus-Ventil 11 folgt im Druckmittelweg ein Entlüftungsventil 12, welches sein elektrisches Ansteuersignal aus der Elektronik 10 erhält. Dieses Ventil 12 dient dazu, aktiv den Druck in der HL-Leitung zu beeinflußen und stellt damit die gemäß UIC 540-Norm geforderte Fortpflanzungsgeschwindigkeit einer ersten Bremsstufe sicher.

Nachfolgend wird der Druck in einem ersten Meßumformer 20 in ein elektrisches Signal umgeformt und der Elektronik 10 zugeführt. Dieser Meßwert repräsentiert den aktuellen Druck in der HL-Leitung. Nachfolgend im Druckmittelweg sind beispielhaft zwei parallel angeordnete Ventile 15, 17 angeordnet, welche einzeln oder gemeinsam geschaltet den Befüllungsquerschnitt zum Vorratsbehälter 2 variierbar machen. Diese Ventile werden ebenfalls elektrisch aus der Elektronik 10 angesteuert. Vorzugsweise können in die beiden parallelen Druckmittelwegen Drosselquerschnitte eingebaut sein.

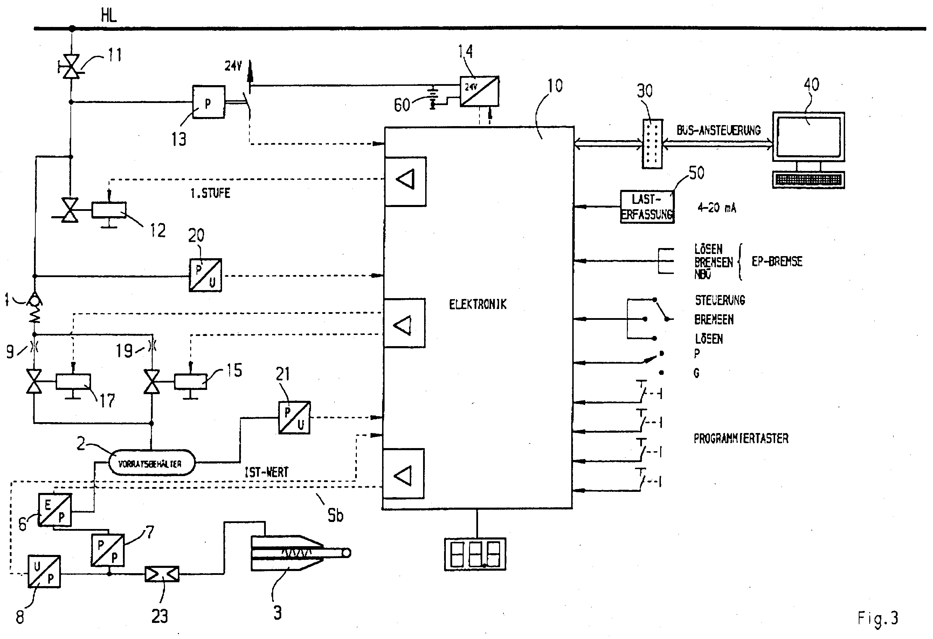

Somit ist eine normale Befüllung, jedoch auch eine Schnellbefüllung nach Erkennen besonderer Druckbefehle in der HL-Leitung möglich. Die Befüllung kann auch nach besonderen Regelkriterien mittels z.B. E/P-Wandler vorgenommen werden.
Zum Sichern des im Vorratsbehälter 2 gespeicherten Vorratsdruckes ist desweiteren ein Rückschlagventil 4 vorgesehen, welches im Falle der pneumatischen Trennung der Druckmittelwege von der HL-Leitung eine Entlüftung des Vorratsbehälters 2 verhindert. Der Druck im Vorratsbehälter wird in einem zweiten Meßumformer 21 gemessen und der Elektronik zugeführt. Im Wege der Informations- bzw. Signalrückkopplung wird in der Elektronik dann das Befüllen des Vorratsbehälters 2 nach definierten Kriterien gesteuert. Gegenüber bekannten Lösungen ist es somit möglich den Druck im Vorratsbehälter 2 individuell und reproduzierbar einzustellen, im Gegensatz zu bekannen Lösungen, bei denen nur schwellwertgesteuert vorgegangen wird. Nachfolgend zum Vorratsbehälter 2 ist ein Proportionalmengenregler für das Arbeitsmedium der Bremsanlage angeordnet, welcher ebenfalls über die Elektronik 10 angesteuert wird. Dieser Proportionalmengenregler 5 steuert im Bremsfall aus dem Vorratsbehälter 2 oder einem hier nicht gezeichneten Vorratsbehälter für ein anderes Arbeitsmedium nun den durch die HL-Leitung gegebenen Bremssignal-proportionalen Bremsdruck. Der genannte Proportionalmengenregler 5 kann auch funktional durch eine Anordnung gemäß Fig. 3 substituiert werden.

Dies geschieht erfindungsgemäß durch eine Anordnung eiens EP-Umformers 6 sowie eines nachgeschalteten PP-Umformers bzw. Druckumsetzers 7. Eine solche Lösung hätte den Vorteil, daß bei einer Unterbrechung der elektrischen Ansteuerung der Druck in dem Druckmittelsystem bis hin zum Bremszylinder erhalten bleibt.

Fernerhin ist im ersten Fall, d.h. bei Verwendung eines Proportionalventils bzw. Proportionalmengenreglers 5, oder im zweiten Fall d.h. bei Verwendung eines E/P-Umformers und eines P/P-Druckumsetzers, ein Meßumformer 8 enthalten, welcher den Ausgangsdruck, d. h. den zum Bremszylinder durchgesteuerten Druck misst. Dieser gemessene Druckwert wird dabei als Istwert der Elektronik 10 zugeführt und mit dem durch die HL-Leitung ausgelösten, und über den Meßumformer 20 in die Elektronik 10 eingespeisten Sollwert verglichen. Insgesamt ergibt sich gegenüber der herkömmlichen Steuerventilanordnung eine insgesamt "geschlossen" vorgenommene Regelung der Bremsdruckansteuerung für den Bremszylinder.

Ferner hat man durch die Plazierung einer Elektronik 10 auch die Zugriffsmöglichkeit bis hin zur Lokomotive. Hierbei kann im Zugriff auf die Elektronik 10 ein Bussystem 30 vorgesehen sein, welches mit einem zentralen Computer 40 und einer Mensch-Maschine-Schnittstelle im Führerraum verbunden ist. Ferner kann durch die Elektronik als z.B. ein zusätzlicher Parameter die Gewichts- bzw. Lasterfassung 50 des Wagens eingeführt werden. Ferner können die Signale lösen und bremsen auch durch das Führerbremsventil der Lokomotive elektronisch erzeugt und über den Datenbus in die jeweilige Elektronik 10 eingespeist werden. Fernerhin ermöglichen Programmiertaster an der Elektronik 10 eine mögliche Codierung eines jeden einzelnen Fahrzeuges. Besondere, die Bremssteuerung und Bremskonzeption betreffende Kernmerkmale können bleibend in der Elektronik 10 abgespeichert und Bauart bezogen aktiviert werden.

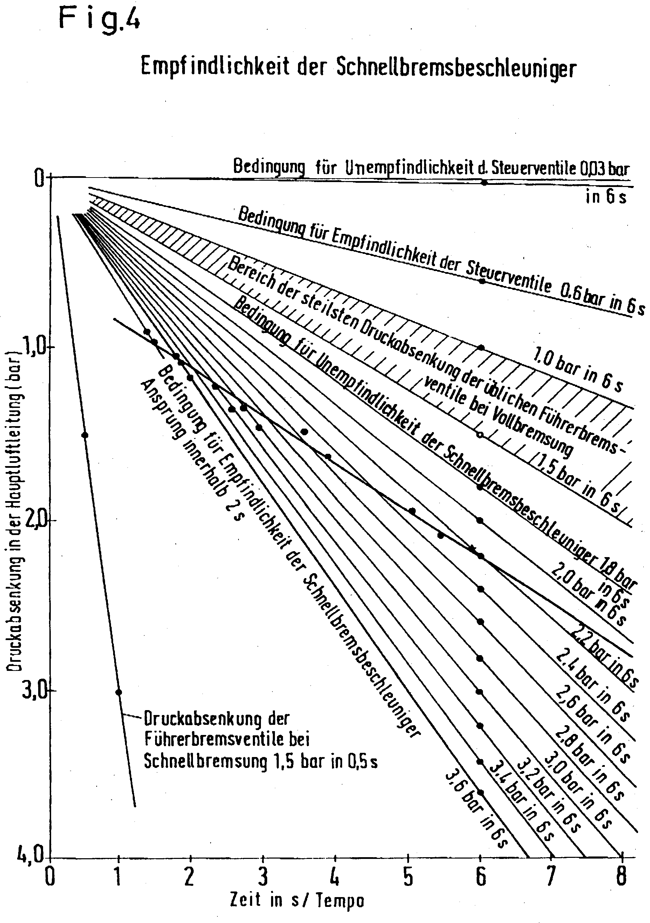

Figur 4 zeigt die Empfindlichkeit der Bremseinrichtung als Funktion der Druckabsenkung in der Hauptluftleitung HL als Funktion der Zeit. Hierbei sind die Druckabfall-Gradienten nach der UIC Norm zu erkennen. Für starke Bremsungen ist dieser Gradient entsprechend groß, das bedeutet großer Druckabfall pro Zeiteinheit; und für eine schwache Bremsung sind diese Druckgradienten entsprechend klein, d.h. kleiner Druckabfall pro Zeiteinheit.

Der Löse-Druck in der Darstellung der Druckgradienten ist der zu "Null" normierte Ausgangsdruck aller möglichen Druckgradienten, über welche die Stärke des Bremsvorganges beeinflußt wird.

## Patentansprüche

1. Druckmittelbetriebene Bremseinrichtung für Schienenfahrzeugverbände mit einer Hauptluftleitung (HL), über welche sowohl die einzelfahrzeugbezogenen Druckmittelreservoire (2) befüllt werden, als auch die pneumatische Bremssignalübertragung erfolgt, wobei an jedem Einzelfahrzeug eine Steuerventileinrichtung (1) angeordnet ist, welche bei Druckabfall in der Hauptluftleitung (HL) eine dem Maß des Druckabfalls proportionale Durchsteuerung des Druckmittels aus dem Reservoir (2) zum Bremszylinder (3) bewirkt,
dadurch gekennzeichnet,
daß die Steuerventileinrichtung (1) jeweils Proportionalventil-Funktion und darüber hinaus elektronische und/oder elektro-mechanische Mittel (5,6,7,..., 10,... 20, 21) aufweist, über welche der Druckabfall in der Hauptluftleitung (HL) meßbar, und ein elektrisches Ansteuersignal (Sb) zur Durchsteuerung des Druckmittels zum Bremszylinder (3) erzeugbar ist.

2. Bremseinrichtung für Schienenfahrzeugverbände nach Anspruch 1,
dadurch gekennzeichnet,
daß zwei Druck-Spannungs-Wandler (20, 21) vorgesehen sind, wobei dem ersten Druck-Spannungswandler (20) die Messung des Drucks in der Hauptluftleitung (HL) zukommt, und den zweitem Druck-Spannungs-Wandler (21) die Messung des Drucks im Druckmittelreservoir (2) zukommt.

3. Druckmittelbetriebene Bremseinrichtung für Schienenfahrzeugverbände nach Anspruch 2,
dadurch gekennzeichnet,
daß das Ventil zum Durchsteuern des Druckmittels zum Bremszylinder (3) ein Proportionalventil (5) ist.

4. Druckmittelbetriebene Bremseinrichtung für Schienenfahrzeugverbände mit einer Hauptluftleitung (HL) über welche sowohl die Druckmittelversorgung, als auch die pneumatische Bremssignalübertragung erfolgt, wobei an jedem Einzelfahrzeug eine Steuerventileinrichtung (1) angeordnet ist, welche bei Druckabfall in der Hauptluftleitung (HL) eine dem Maß des Druckabfalls proportionale Betätigung des Bremszylinders (3) bewirkt,
dadurch gekennzeichnet,
daß die Steuerventileinrichtung jeweils ein EP-Umsetzer (6) mit nachgeschaltetem Druckumsetzer (7) zur Durchsteuerung des Druckmittels zum Bremszylinder beinhaltet, und darüber hinaus elektronische und/oder elektro-mechanische Mittel aufweist, über welche der Druckabfall in der Hauptluftleitung meßbar und ein elektrisches Ansteuersignal für den EP-Umsetzer (6) erzeugbar ist.

5. Druckmittelbetriebene Bremseinrichtung für Schienenfahrzeuge nach einem oder mehreren der Ansprüche 1 bis 3, oder nach Anspruch 4,
dadurch gekennzeichnet,
daß am Ausgang des Druckumsetzers (7) ein weiterer Druck-Spannungs-Wandler (8) angeordnet ist, dessen Druck als Istwert in die Elektronik (10) einspeisbar ist, und mit dem durch die HL-Leitung ausgelösten Solldruck vergleichbar ist.

6. Druckmittelbetriebene Bremseinrichtung für Schienenfahrzeuge nach einem oder mehreren der vorhergehenden Ansprüche,
dadurch gekennzeichnet,
daß die Proportionalventil-Charakteristik in einem mikroelektronischen Speichermedium abgelegt ist,
daß die Einrichtung den für jedes Fahrzeug jeweils spezifischen Löse-Druck erkennt bzw ermittelt, und dieser in der abgespeicherten Ventilcharakteristik adaptiv berücksichtigbar ist.

7. Druckmittelbetriebene Bremseinrichtung für Schienenfahrzeuge nach einem oder mehreren der vorhergehenden Ansprüche,
dadurch gekennzeichnet,
daß das Netzteil (14) zur Versorgung der Elektronik (10) über einen Schalter (13), welcher abhängig vom Druck in der HL-Leitung schaltet, an Versorgungsspannung schaltbar ist, und daß parallel zum Eingang des Netzteiles eine Batterie (60) vorgesehen ist

## Claims

1. A braking means for rail vehicle sets which is operated by pressure medium, having a main air line (HL) via which both the pressure medium reservoirs (2) relating to individual vehicles are filled and the pneumatic braking signal transmission is effected, with a control valve means (1) being provided on each individual vehicle which in the event of a pressure loss in the main air line (HL) effects controlled supply of the pressure medium from the reservoir (2) to the brake cylinder (3) which is proportional to the amount of the pressure loss, characterised in that the control valve means (1) has in each case a proportional valve function and furthermore electronic and/or electromechanical means (5, 6, 7, ..., 10, ... 20, 21) via which the pressure loss in the main air line (HL) can be measured and an electric driving signal (Sb) can be generated for controlled supply of the pressure medium to the brake cylinder (3).

2. A braking means for rail vehicle sets according to Claim 1, characterised in that two pressure/voltage converters (20, 21) are provided, the first pressure/voltage converter (20) effecting the measurement of the pressure in the main air line (HL), and the second pressure/voltage converter (21) effecting the measurement of the pressure in the pressure medium reservoir (2).

3. A braking means for rail vehicle sets which is operated by pressure medium according to Claim 2, characterised in that the valve for controlled supply of the pressure medium to the brake cylinder (3) is a proportional valve (5).

4. A braking means for rail vehicle sets which is operated by pressure medium, having a main air line (HL) via which both the supply of pressure medium and the pneumatic braking signal transmission is effected, with a control valve means (1) being provided on each individual vehicle which in the event of a pressure loss in the main air line (HL) effects actuation of the brake cylinder (3) which is proportional to the amount of the pressure loss, characterised in that the control valve means comprises in each case an EP converter (6) with subsequent pressure converter (7) for controlled supply of the pressure medium to the brake cylinder, and furthermore has electronic and/or electromechanical means via which the pressure loss in the main air line can be measured and an electric driving signal for the EP converter (6) can be generated.

5. A braking means for rail vehicles which is operated by pressure medium, according to one or more of Claims 1 to 3, or according to Claim 4, characterised in that an additional pressure/voltage converter (8) is arranged at the exit from the pressure converter (7), the pressure of which converter (8) can be fed into the electronic equipment (10) as an actual value, and can be compared with the desired pressure triggered by the main air line.

6. A braking means for rail vehicles which is operated by pressure medium, according to one or more of the preceding claims, characterised in that the proportional valve characteristic is stored in a microelectronic storage medium,
that the means recognises or determines the specific triggering pressure for each vehicle, and said pressure can be taken into account adaptively in the stored valve characteristic.

7. A braking means for rail vehicles which is operated by pressure medium, according to one or more of the preceding claims, characterised in that the supply unit (14) for supplying power to the electronic equipment (10) can be switched to supply voltage via a switch (13) which switches dependent on the pressure in the main air line, and that a battery (60) is provided in parallel to the entry to the supply unit.

## Revendications

1. Dispositif de freinage, actionné par du fluide sous pression, pour des assemblages de véhicules sur rails, comportant un conduit d'air principal (HL), grâce auquel aussi bien les réservoirs de fluide sous pression (2) liés à des véhicules individuels sont remplis qu'également la transmission pneumatique du signal de freinage est effectuée, un dispositif de valve de commande (1) étant agencé sur chaque véhicule individuel, lequel, lorsque la pression dans le conduit d'air principal (HL) chute, permet un passage du fluide sous pression, proportionnel à la valeur de la chute de pression, du réservoir (2) au cylindre de frein (3),
caractérisé en ce que le dispositif de valve de commande (1) présente, a chaque fois, un fonctionnement de valve proportionnelle et, par ailleurs, des moyens électroniques et/ou électromécaniques (5,6,7,...10,...20,21), grâce auxquels la chute de pression dans le conduit d'air principal (HL) est mesurable, et un signal de commande électrique (Sb) pour le passage du fluide sous pression vers le cylindre de frein (3) peut être engendré.

2. Dispositif de freinage pour des assemblages de véhicules sur rails selon la revendication 1,
caractérisé en ce que deux transducteurs pression-tension (20,21) sont prévus, la mesure de la pression dans le conduit d'air principal (HL) étant effectuée dans le premier transducteur pression-tension (20), et la mesure de la pression dans le réservoir de fluide sous pression (2) étant effectuée dans le second transducteur pression-tension (21).

3. Dispositif de freinage, actionné par du fluide sous pression, pour des assemblages de véhicules sur rails selon la revendication 2,
caractérisé en ce que la valve pour le passage du fluide sous pression vers le cylindre de frein (3) est une valve proportionnelle (5).

4. Dispositif de freinage, actionné par du fluide sous pression, pour des assemblages de véhicules sur rails, comportant un conduit d'air principal (HL), grâce auquel aussi bien l'alimentation en fluide sous pression, qu'également la transmission pneumatique du signal de freinage, sont effectuées, un dispositif de valve de commande (1) étant agencé sur chaque véhicule individuel, lequel, lorsque la pression dans le conduit d'air principal (HL) chute, permet un actionnement, proportionnel à la valeur de la chute de pression, du cylindre de frein (3),
caractérisé en ce que le dispositif de valve de commande comporte, à chaque fois, un transducteur électronique-pneumatique (6) avec, en aval, un transducteur de pression (7) pour le passage du fluide sous pression vers le cylindre de frein et, par ailleurs, présente des moyens électroniques et/ou électromécaniques, grâce auxquels la chute de pression dans le conduit d'air principal peut été mesurée, et un signal de commande électrique pour le transducteur électronique-pneumatique 6) peut être engendré.

5. Dispositif de freinage, actionné par du fluide sous pression, pour des assemblages de véhicules sur rails selon une ou plusieurs des revendications 1 à 3 ou selon la revendication 4,
caractérisé en ce que, à la sortie du transducteur de pression (7), il est agencé un autre transducteur pression-tension (8), dont la pression peut être fournie comme valeur réelle à l'électronique (10) et avec laquelle la pression de consigne traversant le conduit (HL) peut être comparée.

6. Dispositif de freinage, actionné par du fluide sous pression, pour des véhicules sur rails selon une ou plusieurs des revendications précédentes,
caractérisé en ce que la caractéristique de valve proportionnelle est mémorisée dans une mémoire micro-électronique, en ce que le dispositif reconnaît ou détecte la pression de déclenchement spécifique pour chaque véhicule, et celle-ci peut être prise en compte, de manière adaptative, dans la caractéristique de valve mémorisée.

7. Dispositif de freinage, actionné par du fluide sous pression, pour des véhicules sur rails selon une ou plusieurs des revendications précédentes,
caractérisé en ce que l'alimentation électrique (14) pour alimenter l'électronique (10) peut être mise en circuit, par l'intermédiaire d'un commutateur (13), lequel commute de façon dépendant de la pression dans le conduit (HL), à la tension d'alimentation, et en ce que, parallèlement à l'entrée de l'alimentation électrique, il est prévu une batterie (60).
